# DEMANDE DE BREVET EUROPEEN

(11) **EP 2 680 184 A1**
(43) Date de publication de la demande: **01.01.2014**
(21) Numéro de dépôt: 12173899.1
(22) Date de dépôt: 27.06.2012
(51) Int. Cl.: G06F 21/86, G06K 19/073

(54) **Circuit intégré protégé contre des intrusions d'un pirate**

(71) Demandeur: EM Microelectronic-Marin SA, 2074 Marin (CH)
(72) Inventeur: Acovic, Alexandre, 1027 Lonay (CH); Marsico, Vittorio, 2088 Cressier (CH)
(74) Mandataire: Surmely, Gérard

(57) **Abrégé**

Circuit intégré (2) comprenant des moyens de protection d'au moins une partie (4) à protéger de ce circuit intégré, ces moyens de protection étant formés par au moins une structure conductrice de protection (8a-8d) agencée dans ou/et sur cette partie à protéger, chaque structure conductrice de protection étant chargée initialement de manière que sa charge électrique soit dans une plage de charge donnée. Chaque structure conductrice de protection est associée à un circuit de détection (10a-10d) du niveau de charge de cette structure conductrice de protection permettant de déterminer si ce niveau de charge correspond à une charge électrique dans ladite plage de charge donnée. Le circuit de détection associé à chaque structure conductrice de protection fournit un signal de protection (PS) qui est utilisé par le circuit intégré pour rendre non-fonctionnelle au moins partiellement la partie à protéger correspondante lorsque le niveau de charge détecté pour cette structure conductrice de protection ne correspond plus à une charge électrique dans la plage de charge donnée.

## Description

### Domaine technique

La présente invention concerne le domaine des circuits intégrés et plus particulièrement de la protection de ces circuits intégrés contre des intrusions de pirates en circuits électroniques, lesquels cherchent à lire des données sensibles ou à analyser un protocole de gestion du circuit intégré ou encore à déterminer un algorithme de cryptage des données, etc.

### Arrière-plan technologique

Plusieurs développements ont déjà été proposés pour lutter contre les pirates en circuits intégrés. Parmi les solutions implémentées, on citera par exemple une des méthodes suivantes ou une combinaison de ces méthodes:
- couvrir le circuit à protéger, notamment une mémoire EEPROM, par du métal ou autre couche opaque non actif électriquement, mais qui le protège des radiations UV et d'une analyse visuelle par exemple à l'aide d'un microscope optique ;
- agencer au moins un fusible qui déconnecte la mémoire de la haute tension ou qui empêche la lecture de son contenu ;
- incorporer une structure « leurre », c.-à-d. que la partie à protéger, par exemple la mémoire ou le circuit logique, est « noyée » dans d'autres structures de sorte qu'il soit difficile de savoir où elle se trouve exactement et quelle est sa fonction ;
- agencer un circuit de protection à code d'accès ;
- prévoir au moins un bit de protection.

Ainsi, par exemple dans certains microcontrôleurs, dans l'état actuel de l'art, il est prévu un bit de protection qui, une fois programmé, empêche de lire le contenu de la mémoire. Il est seulement possible ensuite d'effacer toute la mémoire (y compris ce bit de protection). Toutefois, si le bit est localisé, et on peut l'effacer sélectivement aux UVs en appliquant un cache sur le reste de la mémoire. Certes une couverture de la mémoire et du bit de protection par du métal rend ceci difficile, mais un effacement par un rayonnement intense n'est pas exclu. On peut aussi enlever la protection de métal par attaque chimique ou mécanique.

### Résumé de l'invention

La présente invention a pour but de proposer un circuit intégré avec une protection efficace d'au moins une partie sensible de ce circuit intégré, de manière à augmenter la protection des circuits intégrés de l'art antérieur et rendre ainsi plus difficile l'intrusion d'un pirate en circuits intégrés dans le circuit intégré lorsque ce dernier est actif.

A cet effet, la présente invention a pour objet un circuit intégré comprenant des moyens de protection d'au moins une partie à protéger de ce circuit intégré qui sont formés par au moins une structure conductrice de protection agencée dans cette partie à protéger ou/et sur cette partie à protéger ou/et dessous cette partie à protéger, chaque structure conductrice de protection étant chargée initialement de manière que sa charge électrique soit dans une plage de charge donnée. Chaque structure conductrice de protection est associée à un circuit de détection du niveau de charge de cette structure conductrice de protection permettant de déterminer si ce niveau de charge correspond à une charge électrique dans la plage de charge donnée. Le circuit de détection associé à chaque structure conductrice de protection fournit un signal de protection qui est utilisé par le circuit intégré ou un circuit de protection associé à ce dernier pour rendre non-fonctionnelle au moins partiellement la partie à protéger correspondante lorsque le niveau de charge détecté pour cette structure conductrice de protection ne correspond plus à une charge électrique dans la plage de charge donnée.

Selon une variante particulière, le circuit de détection associé à chaque structure conductrice de protection est formé par au moins un transistor de lecture ayant une grille conductrice située au-dessus du canal de ce transistor de lecture et reliée à cette structure conductrice de protection.

Selon un mode de réalisation préféré, chaque structure conductrice de protection est formée par une structure métallique agencée dans au moins un niveau de métallisation propre au circuit intégré et/ou dans un dernier niveau de métallisation propre à cette structure conductrice de protection ou aux structure(s) conductrice(s) de protection prévues, chaque structure métallique étant reliée à une grille flottante d'un transistor d'injection agencé de manière à permettre l'injection de charges électriques dans cette structure métallique via cette grille flottante.

Selon une variante préférée, en au moins une structure métallique susmentionnée s'étend dans plusieurs niveaux de métallisation du circuit intégré.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 représente schématiquement un mode de réalisation général d'un circuit intégré selon l'invention ;
- La Figure 2 est un schéma d'un premier mode de réalisation particulier d'un circuit intégré selon l'invention ;
- La Figure 3 est un schéma d'un deuxième mode de réalisation particulier d'un circuit intégré selon l'invention ;
- La Figure 4 est une coupe partielle et schématique d'une variante de réalisation préférée ; et
- La Figure 5 est une coupe partielle et schématique d'un troisième mode de réalisation particulier d'un circuit intégré selon l'invention.

### Description détaillée de l'invention

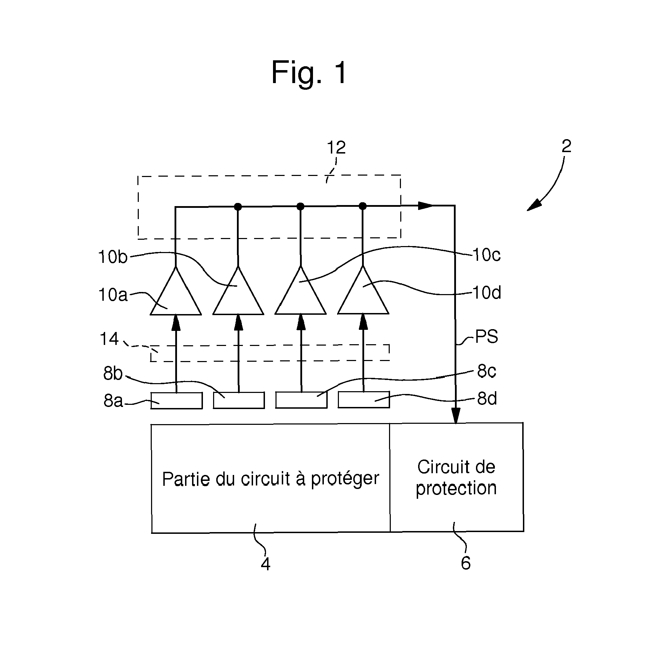

A la Figure 1 est représenté schématiquement un mode de réalisation général d'un circuit intégré 2 selon l'invention. Ce circuit comprend au moins une partie 4 à protéger et des moyens de protection de cette partie qui comprennent un circuit de protection 6 permettant d'agir sur la partie à protéger 4 en réponse à un signal de protection PS, de manière à désactiver au moins une fonction de la partie 4 ou à effacer une mémoire, ou encore à modifier le fonctionnement de cette partie ; ceci dans le but d'empêcher un pirate de circuits électroniques de déterminer le fonctionnement de la partie à protéger ou d'avoir accès à des données sensibles de cette partie à protéger. Selon l'invention, les moyens de protection sont formés par au moins une structure conductrice de protection agencée dans ou/et sur cette partie à protéger. Dans la variante de la Figure 1, les moyens de protection du circuit intégré 2 comprennent quatre structures conductrices 8a, 8b, 8c et 8d qui sont chargées initialement de manière que chacune ait une charge électrique qui soit dans une plage de charge donnée. Dans une première variante, toutes les structures sont chargées au-dessus d'un certain niveau de charge. Dans une deuxième variante, chaque structure conductrice a une charge électrique spécifique située dans une plage de charge particulière. Dans l'exemple de la Figure 1, on peut ainsi prévoir que chacune des structures 8a à 8d ait une charge électrique dans une plage de charge différente parmi quatre plages de charge déterminées. Cette deuxième variante rend bien plus difficile pour un pirate de contourner ou de rendre inopérant les moyens de protection prévus.

Selon l'invention, chaque structure conductrice de protection est associée à un circuit de détection ou détecteur 10a, respectivement 10b, 10c et 10d du niveau de charge de cette structure conductrice, permettant ainsi de déterminer si ce niveau de charge correspond à une charge électrique dans la plage de charge prévue pour cette structure conductrice. Chaque circuit de détection envoie un signal de protection au circuit de protection 6, ce signal indiquant si le niveau de charge prévu demeure bien tel que prévu. Les signaux de protection peuvent être envoyés directement ou via un circuit combinatoire 12, comme ceci sera décrit plus en détail par la suite.

Dans le premier cas, par exemple, tant que le niveau de charge détecté par un détecteur est dans la plage de charge prévue, le signal de sortie de ce détecteur reste bas, à Vss ou Gnd, correspondant par exemple à un signal logique '0'. Si nécessaire, des inverseurs logiques sont intégrés. Tant que les quatre détecteurs détectent respectivement des charges électriques dans les plages correspondantes prévues, le circuit de protection reçoit un signal PS bas ('0'). Dès qu'un détecteur mesure une charge électrique hors de la plage de charge prévue, il fournit en sortie un signal haut, notamment sensiblement à Vdd, correspondant alors à un signal logique '1'. En conséquence, la ligne du signal PS monte sensiblement à Vdd de sorte que le circuit de protection 6 reçoit alors un signal haut ('1') indiquant que la charge d'au moins une des structures conductrices de protection a varié. En réponse à ce dernier signal, le circuit de protection réagit de manière à protéger la partie à protéger 4, par exemple de manière décrite précédemment.

Dans le deuxième cas, avec les signaux des détecteurs tels que décrit ci-dessus, les signaux de sortie de ces détecteurs sont fournis à une porte logique ou circuit logique NON-OU ('NOR') ou OU ('OR') à quatre entrées selon l'utilisation du signal de protection. Si nécessaire, on peut implémenter des inverseurs logiques dans la partie du circuit à protéger. Dans ce deuxième cas, si un niveau haut en sortie du détecteur correspond à un niveau de charge correct alors qu'un niveau bas indique que le niveau de charge a varié et n'est plus dans ce niveau de charge correct, alors les signaux de sortie des détecteurs sont fournis à une porte logique ou un circuit logique ET ('AND') ou NON-ET ('NAND'). On notera que d'autres variantes peuvent être prévues et le circuit combinatoire peut être prévu plus complexe. En résumé, le circuit de détection associé à chaque structure conductrice de protection fournit un signal de protection qui est utilisé par le circuit intégré pour rendre non-fonctionnelle au moins la partie à protéger lorsque le niveau de charge détecté pour cette structure conductrice de protection ne correspond plus à une charge électrique dans la plage de charge donnée.

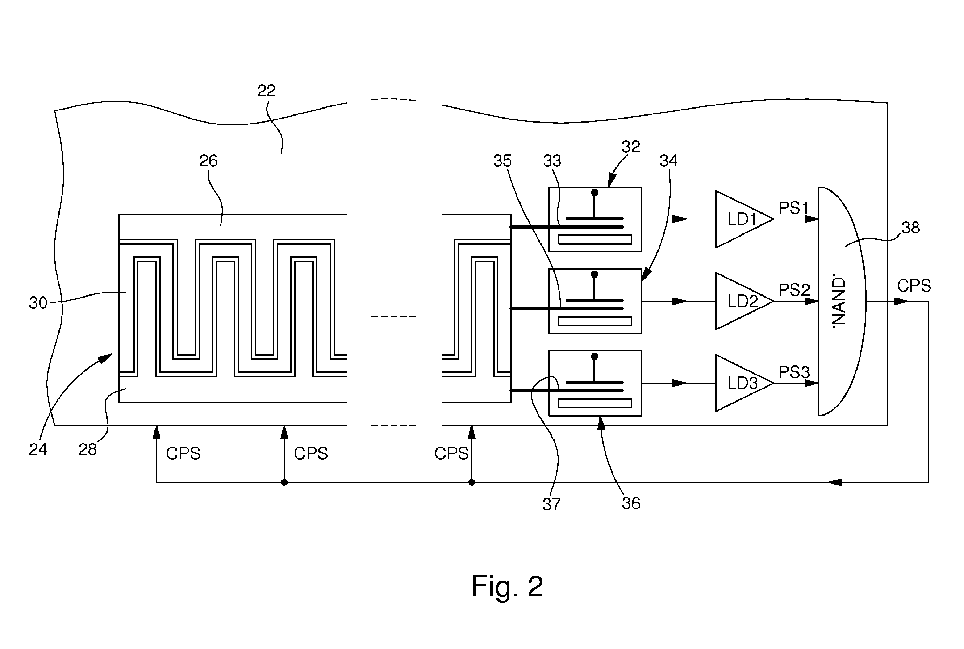

A la Figure 2 est représenté un premier mode de réalisation particulier d'un circuit intégré 22 selon l'invention. Ce circuit 22 comprend une partie 24 à protéger. A cet effet, trois structures métalliques de protection 26, 28 et 30 sont agencées dans au moins un niveau de métallisation propre au circuit intégré 22 et/ou dans un dernier niveau de métallisation propre aux structures métalliques de protection. De préférence, chaque structure métallique s'étend dans plusieurs niveaux de métallisation. Dans une autre variante plus aisée à implémenter, en particulier dans des circuits intégrés dont le design est déjà réalisé, les structures métalliques s'étendent essentiellement dans un dernier niveau de métallisation propre aux structures conductrices de protection. La structure métallique 30 présente un design définissant au moins en partie un serpentin alors que les structures métalliques 26 et 28 présentent chacune un design définissant au moins en partie un peigne. Dans la variante représentée, les deux peignes sont imbriquées dans le serpentin. On remarquera qu'il s'agit ici d'une variante de réalisation particulière, mais l'homme du métier saura aisément concevoir d'autres designs de structure métallique de protection. La variante représentée est avantageuse notamment par le fait qu'une attaque de la partie 24 engendrera vraisemblablement une variation de la charge électrique dans plusieurs des structures de protection prévues. On notera ici que tout essai d'attaque, d'analyse, de lecture ou d'effacement de la mémoire qui se trouve en dessous des structures métalliques (par rayonnement, par UV, par enlèvement de couches via une attaque chimique ou mécanique, lors d'un contact électrique, etc....) détruit tout ou partie de la charge électrique stockée dans les structures de protection.

Pour vérifier le niveau de charge dans les structures métalliques, un circuit de détection associé à chaque structure métallique comprend au moins un transistor de lecture 32, respectivement 34 et 36, ayant une grille flottante 33, respectivement 35 et 37, reliée à la structure métallique. La « lecture» du niveau de charge d'une structure métallique nécessite normalement l'application d'une tension sur la grille de commande du transistor de lecture correspondant. De préférence, pour limiter en particulier la consommation de courant, la détection du niveau de charge, via le courant électrique traversant le transistor de lecture, est réalisée périodiquement, par exemple toutes les microsecondes ou toutes les millisecondes. Ensuite, chaque circuit de détection comprend un détecteur de niveau de charge LD1, respectivement LD2, LD3, agencée pour déterminer si la charge électrique de la structure métallique correspondante est dans une plage donnée. En sortie des trois détecteurs de niveaux de charge sont fournis respectivement trois signaux de protection PS1, PS2 et PS3 dont le niveau ou la valeur logique indique si les niveaux de charge correspondants sont corrects, comme exposé aussi précédemment.

Selon ce premier mode de réalisation particulier, les trois signaux de protection sont fournis à un circuit combinatoire 38. A titre d'exemple, il est prévu que les signaux de protection PS1, PS2 et PS3 aient chacun un état haut lorsque le niveau de charge correspondant est correct. Le circuit combinatoire est formé par une porte NON-ET ('NAND'). Ainsi, tant que tous les niveaux de charge des structures métalliques prévues sont corrects, le signal de protection combiné CPS à la sortie de cette porte NON-ET présente un niveau bas (état logique '0'). Par contre, dès qu'un des détecteurs détecte un niveau de charge hors de la plage donnée correspondante, le signal CPS passe dans un niveau haut (état logique '1'). Dans ce dernier cas, le signal de protection combiné CPS est fourni à diverses parties ou éléments de la partie 24 à protéger de manière à perturber ou modifier le fonctionnement du circuit à protéger pour rendre inopérante l'attaque, en particulier l'essai de lecture d'une mémoire protégée ou de modification de cette mémoire protégée ou encore l'essai de détermination du fonctionnement d'un circuit logique protégé. De manière générale, ce premier mode de réalisation est **caractérisé en ce que** les signaux de protection générés par au moins deux détecteurs de niveau de charge, associés respectivement à au moins deux structures conductrices de protection, sont fournis à un circuit combinatoire générant un signal combiné qui agit sur un ou plusieurs élément(s) d'au moins la partie à protéger 24.

Selon une variante préférée de l'invention, chaque structure métallique est reliée à une grille flottante d'un transistor d'injection agencé de manière à permettre l'injection de charges électriques dans cette structure métallique via cette grille flottante. Dans la variante de la Figure 2, les transistors de lecture 32, 34 et 36 peuvent être agencés pour former également des transistors d'injection de charges électriques permettant d'injecter initialement la quantité de charges donnée dans les structures métalliques correspondantes. Ils forment notamment des transistors du type 'transistor mémoire d'une EEPROM'. Ces transistors mémoire sont par exemple du type classique, avec deux niveaux de polysilicium superposés définissant respectivement la grille flottante et la grille de commande des transistors mémoire. Ainsi, le circuit de détection associé à chaque structure conductrice de protection est formé par un transistor de lecture associé à un transistor d'injection de charges électriques qui définissent ensemble un transistor du type 'transistor mémoire d'une EEPROM'.

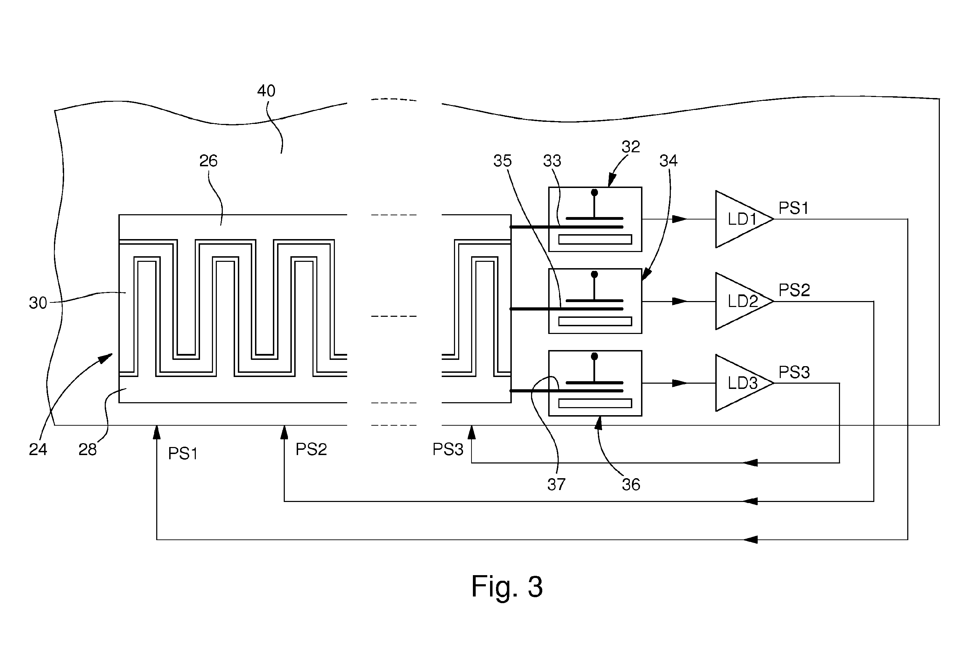

Ce premier mode de réalisation présente une certaine faiblesse par le fait que le circuit combinatoire 38 fournit un seul signal de protection CPS qui est transmit à la partie à protéger pour rendre inopérante au moins cette partie du circuit intégré. Ce problème est résolu par le deuxième mode de réalisation particulier de la Figure 3. Les références déjà décrites précédemment ne seront pas décrites à nouveau en détail ci-après. Le circuit intégré 40 se distingue du circuit intégré 22 de la Figure 2 par le fait que le circuit combinatoire a été éliminé. Ainsi, les détecteurs LD1, LD2 et LD3 fournissent respectivement trois signaux de protection PS1, PS2 et PS3 qui sont transmis individuellement, c'est-à-dire séparément, à divers endroits du circuit intégré 40 pour protéger la partie 24 contre une intrusion non autorisée. Ainsi, les détecteurs peuvent être placés à différents endroits sous les structures métalliques 26, 28 et 30 ou en périphérie de celles-ci et avoir des chemins électriques variés et espacés vers les parties du circuit sur lesquelles les signaux de protection agissent. Dans une variante, il est cependant prévu que les divers signaux soient transmis par divers chemins vers une ou plusieurs mêmes parties ou éléments du circuit intégré, de manière que ces signaux aient au moins partiellement une même action de protection.

Selon ce deuxième mode de réalisation particulier, de manière générale, le signal de protection généré par au moins un des détecteurs associé(s) respectivement à au moins une des structures conductrices de protection agit séparément des autres signaux de protection sur un ou plusieurs élément(s) d'au moins une partie à protéger. Comme indiqué, cette action séparée peut consister seulement en des chemins électriques différents entre les détecteurs et les parties du circuit sur lesquelles agissent les signaux de protection, par exemple une mémoire qui est effacée suite à la détection d'une variation de charges électriques dans une structure conductrice de protection.

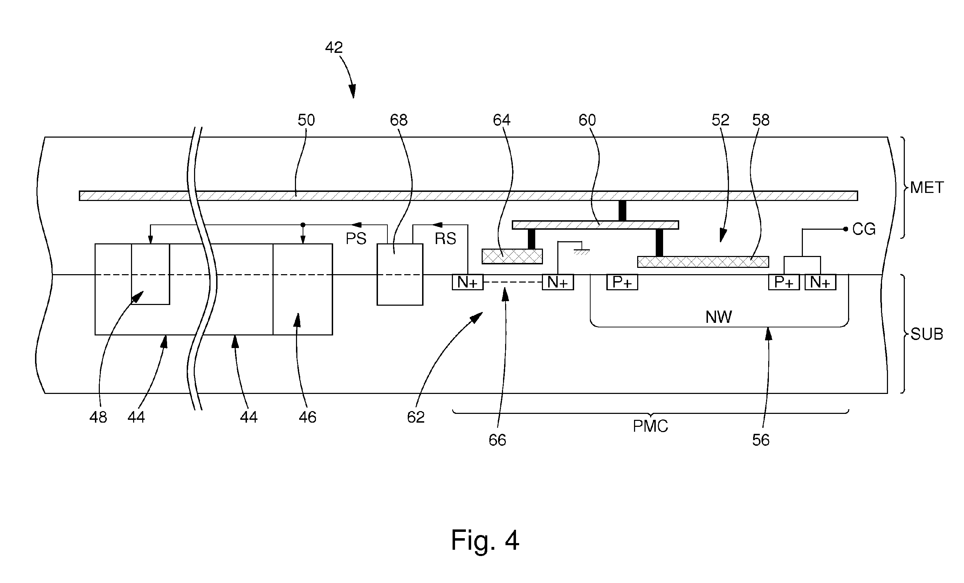

A la Figure 4 est montrée une coupe partielle et schématique d'une variante de réalisation préférée. Le circuit intégré 42 comprend un circuit logique 44, associé à une horloge interne 48, et une mémoire 46 tous représentés schématiquement sous forme de blocs. Il est prévu ici de protéger ces parties du circuit intégré ainsi que le circuit de protection associé à au moins une structure métallique de protection 50. Cette structure 50 est agencée dans les niveaux de métallisation MET du circuit 42. Elle est représentée dans un seul plan, mais comme indiqué précédemment, elle peut s'étendre dans divers niveaux de métallisation, les diverses parties d'une même structure étant alors reliés par des vias. Le circuit de protection associé à la structure métallique 50 comprend essentiellement une cellule mémoire de protection PMC, formée par un transistor du type 'transistor mémoire d'une EEPROM' avec un design selon la technologie à une seule couche de polysilicium, et un détecteur de niveau de charge 68.

La cellule mémoire de protection PMC comprend un transistor d'injection 52 de charges électriques dans la structure métallique 50 qui est reliée électriquement à une grille flottante en polysilicium 58 de ce transistor d'injection via une plage métallique 60 prévue notamment dans le premier niveau de métallisation. De manière connue, on charge la cellule mémoire de protection en appliquant une haute tension sur la grille de commande CG, laquelle est connectée à un puits dopé 56 (NW) dans le substrat SUB. Ce puits dopé s'étend sous la grille flottante 58 qui est séparée de ce puits par une mince couche d'oxyde de silicium. En chargeant la cellule mémoire de protection par une technologie connue, on peut ainsi charger la structure métallique de protection jusqu'à un niveau de charge donné, cette structure métallique de protection formant une extension de la grille flottante 58. La structure métallique 50 est donc reliée à une grille flottante d'un transistor d'injection 52 qui est agencé de manière à permettre l'injection de charges électriques dans cette structure métallique via cette grille flottante.

Ensuite, la cellule mémoire de protection PMC comprend un transistor de lecture 62 ayant une grille flottante en polysilicium 64 située au-dessus du canal 66 de ce transistor et reliée à la structure métallique de protection 50. Dans la variante de la Figure 4, le transistor de lecture 62 est associé au transistor d'injection 52 pour former ensemble un transistor du type 'transistor mémoire d'une EEPROM'. Ces deux transistors partagent une même grille de commande CG et leurs grilles flottantes respectives 58 et 64 sont reliées par la plage métallique 60. On notera que dans d'autres variantes, il est possible de prévoir que le transistor de lecture ait sa propre grille de commande, agencée pour ne recevoir que la tension vdd mais pas la haute tension (HV). Ensuite, les deux grilles 58 et 64 peuvent être éloignées l'une de l'autre et reliées chacune directement à la structure métallique de protection 50 (donc sans plage métallique 60 formant un pont entre elles). Le courant électrique circulant dans le canal 66 du transistor de lecture 62, lorsqu'il est activé par une tension de lecture sur la grille de commande CG, est une fonction du niveau de charge de la structure métallique 50. Ce courant électrique définit un signal de lecture RS qui est fourni au détecteur de niveau de charge 68, lequel est agencé pour déterminer si le niveau de charge dans la structure métallique 50 est dans une plage donnée correcte. Finalement, le détecteur de niveau de charge envoie un signal de protection PS à divers endroits de la partie du circuit protégée, notamment à la mémoire 46 et à l'horloge 48 pour arrêter cette dernière et bloquer toute lecture de la mémoire.

Dans une variante particulière, après avoir chargé initialement la structure métallique de protection, il est prévu d'empêcher une introduction ultérieure de charges électriques dans cette structure, par exemple en brûlant un fusible électrique ou en claquant une capacité électrique pour empêcher l'apport d'une haute tension sur la grille de commande CG ; ce qui interdit tout apport ou retrait de charge ultérieur.

Pour éviter qu'un pirate essaie de contacter la ou les structures métalliques de protection, on peut la/les recouvrir d'une ou de plusieurs structure(s) conductrice(s) fonctionnelle(s) du circuit intégré. Ces structures conductrices fonctionnelles ont par exemple une forme de peigne ou de serpentine. Les caractéristiques électriques de ces structures conductrices fonctionnelles (conduction, résistance, capacité) sont requises pour le fonctionnement de la partie à protéger. Ces peignes et serpentines peuvent être dans une seule couche de métallisation ou dans plusieurs couches superposées ; ce qui peut aisément être implémenté vu le nombre élevé de couches de métal (5 à 10) dans les technologies modernes.

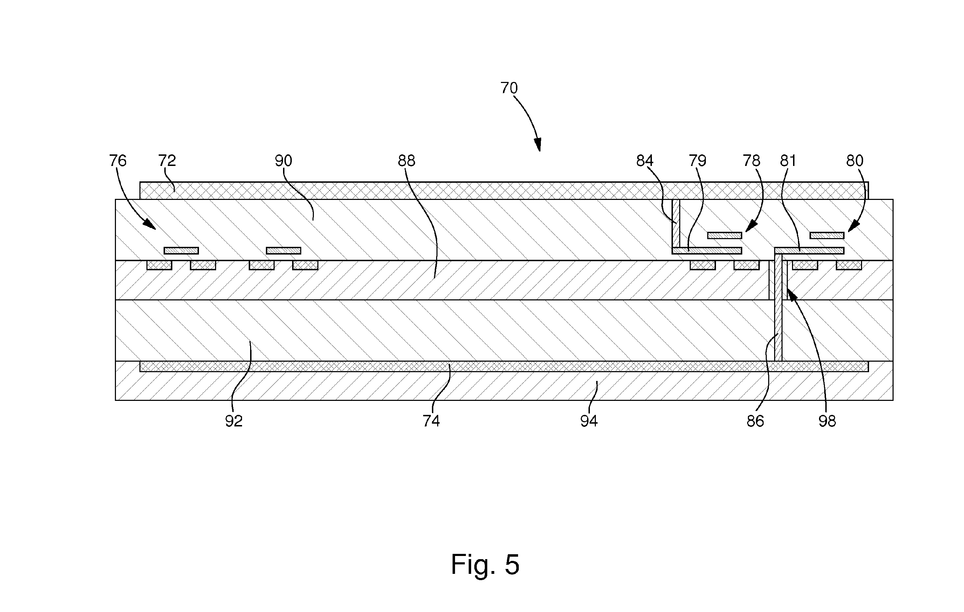

Finalement, à la Figure 5 est représenté schématiquement un troisième mode de réalisation particulier de l'invention dans lequel le circuit intégré 70 est protégé des deux côtés par deux structures conductrices de protection 72 et 74. La première structure 72 est située sur la partie du circuit intégré à protéger alors que la deuxième structure 74 est située sous cette partie à protéger. La partie à protéger est schématiquement représentée par des transistors 76 et elle comprend également deux transistors à grille flottante 78 et 80, du type 'transistor mémoire d'une EEPROM', qui définissent respectivement deux circuits de détection associés respectivement aux deux structures conductrices de protection par l'intermédiaire de leurs grilles flottantes respectives 79 et 81 et de deux vias conducteurs respectifs 84 et 86. De plus, les deux transistors à grille flottante 78 et 80 forment des transistors d'injection de charges électriques dans les structures conductrices 72 et 74. Les éléments du circuit intégré sont agencés dans une couche de silicium médiane 88 et dans une couche d'oxyde de silicium 90 située sur la couche 88. La première structure 72 est une structure métallique agencée dans les niveaux de métallisation, comme décrit précédemment. Selon une technique connue de la personne du métier, notamment dans le cadre de la technologie SOI, il est prévu une deuxième couche d'oxyde de silicium 92 sous la couche de silicium 88. C'est sous cette couche qu'est agencée la deuxième structure conductrice 74 protégeant le circuit intégré d'intrusions par le dessous. Cette deuxième structure conductrice de protection est formée dans une première variante par du silicium dopé n+ qui est conducteur et réalisé dans une couche inférieure en silicium 94. Dans une deuxième variante, la deuxième structure est formée par du polysilicium. Dans une troisième variante, la deuxième structure est formée par une structure métallique déposée sous le circuit intégré. Les vias 84 et 86 sont par exemple réalisés avec du silicium dopé n+ ou du polysilicium ou du métal. Etant donné que le via 86 traverse la couche de silicium 88, il doit être isolé. On a prévu à cet effet un manteau ou une gaine isolante 98 en oxyde de silicium qui entoure le via 86.

## Revendications

1. Circuit intégré (2, 22, 40, 42) comprenant des moyens de protection d'au moins une partie (4, 24) à protéger de ce circuit intégré, **caractérisé en ce que** ces moyens de protection sont formés par au moins une structure conductrice de protection (8a-8d, 26,28,30, 50) agencée dans cette partie à protéger ou/et sur cette partie à protéger ou/et dessous cette partie à protéger, chaque structure conductrice de protection étant chargée initialement de manière que sa charge électrique soit dans une plage de charge donnée ; **en ce que** chaque structure conductrice de protection est associée à un circuit de détection (10a-10d, 32-37,LD1, LD2,LD3, PMC,68) du niveau de charge de cette structure conductrice de protection permettant de déterminer si ce niveau de charge correspond à une charge électrique dans ladite plage de charge donnée ; et **en ce que** ledit circuit de détection associé à chaque structure conductrice de protection fournit un signal de protection (PS) qui est utilisé par le circuit intégré pour rendre non-fonctionnelle au moins partiellement ladite partie à protéger correspondante lorsque ledit niveau de charge détecté pour cette structure conductrice de protection ne correspond plus à une charge électrique dans ladite plage de charge donnée.

2. Circuit intégré selon la revendication 1, **caractérisé en ce que** ledit circuit de détection associé à chaque structure conductrice de protection comprend au moins un transistor de lecture (32, 34, 36, 62) ayant une grille flottante (33, 35, 37, 64) située au-dessus du canal (66) de ce transistor et reliée à cette structure conductrice de protection.

3. Circuit intégré selon la revendication 1, **caractérisé en ce que** chaque structure conductrice de protection est formée par une structure métallique agencée dans au moins un niveau de métallisation propre au circuit intégré et/ou dans un dernier niveau de métallisation propre à ladite au moins une structure conductrice de protection, chaque structure métallique étant reliée à une grille flottante (58) d'un transistor d'injection (52) agencé de manière à permettre l'injection de charges électriques dans cette structure métallique via cette grille flottante.

4. Circuit intégré selon la revendication 3, **caractérisé en ce que** ledit circuit de détection associé à chaque structure conductrice de protection comprend un transistor de lecture (62) associé audit transistor d'injection (52) pour former ensemble un transistor du type 'transistor mémoire d'une EEPROM'.

5. Circuit intégré selon la revendication 4, **caractérisé en ce que** ledit transistor du type 'transistor mémoire d'une EEPROM' a un design selon la technologie à une seule couche de polysilicium.

6. Circuit intégré selon l'une des revendications 3 à 5, **caractérisé en ce que** ladite structure métallique présente un design définissant au moins en partie un serpentin (30) ou un peigne (26, 28).

7. Circuit intégré selon l'une des revendications 3 à 6, **caractérisé en ce que** ladite structure métallique s'étend dans plusieurs niveaux de métallisation.

8. Circuit intégré selon l'une des revendications 3 à 6, **caractérisé en ce que** ladite structure métallique s'étend essentiellement dans un dernier niveau de métallisation propre à ladite au moins une structure conductrice de protection.

9. Circuit intégré selon l'une quelconque des revendications précédentes, **caractérisé en ce qu'**il est prévu plusieurs structures de protection, et **en ce que** le signal de protection (PS1, PS2, PS3) généré par au moins un des détecteurs (LD1, LD2, LD3) associé(s) respectivement à au moins une de ces plusieurs structures conductrices de protection agit séparément des autres signaux de protection sur un ou plusieurs élément(s) de ladite au moins une partie à protéger.

10. Circuit intégré selon l'une quelconque des revendications 1 à 8, **caractérisé en ce qu'**il est prévu plusieurs structures de protection, et **en ce que** les signaux de protection (PS1, PS2, PS3) générés par au moins deux détecteurs de niveau de charge associés respectivement à au moins deux structures conductrices de protection sont fournis à un circuit combinatoire (12, 38) générant un signal combiné (CPS) qui agit sur un ou plusieurs élément(s) de ladite au moins une partie à protéger.
